# NEW EUROPEAN PATENT SPECIFICATION

(11) **EP 2 792 714 B2**
(45) Date of publication and mention of the opposition decision: **23.09.2020**
(45) Mention of the grant of the patent: 23.08.2017
(21) Application number: 12858493.5
(22) Date of filing: 22.11.2012
(51) Int. Cl.: C08L 77/00

(54) **MOLDED PRODUCTS**
FORMKÖRPER
PRODUITS MOULÉS

(30) Priority: 16.12.2011 JP 2011275249
(43) Date of publication of application: 22.10.2014
(73) Proprietor: Mitsubishi Gas Chemical Company, Inc., Tokyo 100-8324 (JP)
(72) Inventor: OGURO, Hatsuki, Hiratsuka-shi Kanagawa 254-0016 (JP); MITADERA, Jun, Hiratsuka-shi Kanagawa 254-0016 (JP)
(74) Representative: Vossius & Partner Patentanwälte Rechtsanwälte mbB
(86) International application number: PCT/JP2012/080262
(87) International publication number: WO 2013/088932

(56) References cited:
- EP-A1- 0 458 470
- EP-A1- 2 554 567
- WO-A1-2012/014772
- WO-A1-2012/110511
- GB-A- 1 490 453
- JP-A- S4 854 176
- JP-A- H04 227 959
- JP-A- S62 223 262
- JP-A- S63 137 956
- JP-A- 2011 105 822
- JP-A- 2012 061 777
- JP-A- 2012 062 417
- JP-B2- S5 432 458
- US-A- 3 553 288
- US-A- 3 968 071
- "Extrusion moulding", Wikipedia, 3 May 2018 (2018-05-03), XP055491299,

## Description

### TECHNICAL FIELD

The present invention relates to molded products formed by molding polyamide resin compositions. Specifically, it relates to molded products having high chemical resistance, low water absorption rate and high dimensional stability. It also relates to processes for preparing such molded products.

### BACKGROUND ART

Polyamide resins generally show excellent mechanical properties such as strength, impact resistance and abrasion resistance as well as high heat resistance and also show good impact resistance so that they are widely used in the fields of electrical/electronic equipment parts, automotive parts, office automation equipment parts, various machine parts, construction materials/housing and equipment parts. Among others, aliphatic polyamide resins such as polyamide 6 and polyamide 66 are widely used as versatile engineering plastics because of their excellent properties and the ease of molding.

However, molded products formed by molding aliphatic polyamide resins have the disadvantages that they show high water absorption (hygroscopy) and low chemical resistance. Specifically, some of molded products formed by molding aliphatic polyamide resins are known to absorb about 5 % by mass of water based on the total mass. In molded products formed from polyamide 66, the elastic modulus possibly causes decrease from about 3 GPa to less than 1 GPa upon water absorption. Further, most importantly, molded products of aliphatic polyamide resins have the disadvantage that they show low chemical resistance, and especially they suffer a significant weight loss resulting in a significant loss in strength and elastic modulus in the presence of an acid or alkali. In addition, molded products obtained by molding aliphatic polyamide resins also have the disadvantage that they show low dimensional stability. Especially, aliphatic polyamide resins are crystalline resins so that the resultingmoldedproducts undergo considerable dimensional changes or warpage, which may impair assembling with or fitting to other parts especially in molded products that are becoming increasingly thinner and smaller such as chassis. The molded products thus obtained also had the disadvantage that they were poor in dimensional stability for use as precision parts because they swelled or deformed when they absorbed moisture.

To compensate the disadvantages of molded products using such crystalline aliphatic polyamide resins, proposals have been made to use them in combination with semi-crystalline polyamide resins.
For example, patent document 1 proposes using a polyamide resin composition comprising (A) a polycaproamide resin or a polyhexamethylene adipamide resin, (B) a semi-aromatic polyamide resin derived from an aliphatic diamine with isophthalic acid and terephthalic acid, (C) an inorganic filler and (D) a saturated aliphatic carboxylic acid. Further, patent document 2 proposes using a polyamide resin composition comprising (A) an aliphatic polyamide resin, (B) a semi-aromatic polyamide resin, (C) an inorganic filler and (D) an oxanilide stabilizer, and mentions specific examples of the semi-aromatic polyamide resin including polyamide resins derived from m- or p-xylylenediamine with adipic acid, and polyamide resins derived from hexamethylenediamine with iso- and terephthalic acids.

However, the polyamide resin compositions proposed in these documents improved in water absorption, but their chemical resistance and dimensional stability during molding were not always sufficient and needed further improvements.

Further, it has been known that biaxially oriented films are made from a resin composition comprising an aliphatic polyamide resin and a polyamide resin synthesized from m-xylylenediamine and a dicarboxylic acid such as sebacic acid (patent document 3). However, films are different from molded products used as machine parts because they have a thickness as small as 0.25 mm or less.

On the other hand, a resin composition comprising a polyamide resin synthesized from m-xylylenediamine and sebacic acid as well as a little amount of an aliphatic polyamide resin has been known (patent document 4). Such a composition was excellent in water absorption and chemical resistance, but sometimes poor in crystallinity. WO,A,2012 110511 pursuant to Article 54(3) EPC) discloses polyamide composition.
EP, A, 0 458 470 discloses polyamide resin, GB,A,1 490 453 discloses polyamide resin composition and JP,A, S62 223262 discloses resin composition.

### REFERENCES

### PATENT DOCUMENTS

Patent document 1: JP-A H3-269056;
Patent document 2: JP-A2010-189467;
Patent document 3: JP-A S48-54176;
Patent document 4: JP-A S63-137955:

### SUMMARY OF THE INVENTION

### PROBLEMS TO BE SOLVED BY THE INVENTION

An object of the present invention is to solve the problems of the prior art described above and to provide molded products showing low water absorption, high chemical resistance, high crystallinity index and high dimensional stability while retaining the excellent mechanical properties intrinsic to aliphatic polyamide resins. Another object is to prepare molded products of aliphatic polyamide resins showing low water absorption, high chemical resistance and high crystallinity index with high dimensional stability.

### MEANS FOR SOLVING THE PROBLEMS

As a result of careful studies to attain the above objects, we surprisingly found that molded products showing remarkably reduced water absorption, high chemical resistance, e.g., a reduced weight loss and therefore a remarkably reduced loss in strength and elastic modulus in the presence of an acid or alkali, as well as high crystallinity index can be obtained while retaining the excellent mechanical properties and the like intrinsic to aliphatic polyamides when they are formed by using a polyamide resin composition according to the claims.

### ADVANTAGES OF THE INVENTION

The present invention made it possible to provide molded products having high chemical resistance, low water absorption, high crystallinity index, and high dimensional stability.

### THE MOST PREFERRED EMBODIMENTS OF THE INVENTION

The present invention will now be explained in detail below. As used herein, the term "to" between two values means to include the values indicated before and after it as lower and upper limits unless otherwise specified.

### [Summary of the Invention]

Molded products formed by molding polyamide resin compositions according to the present invention (hereinafter sometimes referred to as "molded products of the present invention") are obtained by molding a polyamide resin composition consisting of 50 to 99 parts by mass of (A) an aliphatic polyamide resin and 50 to 1 parts by mass of (B) a polyamide resin including 70 mol % or more of a diamine structural unit derived from xylylenediamine and 50 mol % or more of a dicarboxylic acid structural unit derived from sebacic acid, provided that the total of (A) and (B) is 100 parts by mass.

### [(A) Aliphatic polyamide resin]

The aliphatic polyamide resin (A) used in the present invention is an aliphatic polyamide resin obtained by polycondensing a lactam containing three or more ring members, a polymerizable ω-amino acid or an aliphatic dicarboxylic acid with an aliphatic diamine. As used herein, the term "aliphatic" means to also include alicyclic compounds.

Such lactams include, for example, amino acids such as 6-aminocaproic acid, 11-aminoundecanoic acid and 12-aminododecanoic acid; ε-caprolactam, and ω-laurolactam. ω-Amino acids include e-aminocaproic acid, 7-aminoheptanoic acid, 9-aminononanoic acid, 11-aminoundecanoic acid and 12-aminododecanoic acid.

Further, aliphatic dicarboxylic acids include, for example, aliphatic dicarboxylic acids such as oxalic acid, malonic acid, succinic acid, glutaric acid, adipic acid, pimelic acid, suberic acid, azelaic acid, sebacic acid, undecanoic diacid, dodecanoic diacid, brassylicacid, tetradecanoic diacid, pentadecanoic diacid and octadecanoic diacid; and alicyclic dicarboxylic acids such as cyclohexanedicarboxylic acid.

Further, aliphatic diamines include, for example, aliphatic diamines such as ethylenediamine, 1,3-diaminopropane, 1,4-diaminobutane, 1,5-diaminopentane (pentamethylene diamine), 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane and 2-methyl-1,5-diaminopentane; and alicyclic diamines such as cyclohexanediamine.

Specifically, aliphatic polyamide resins (A) preferably include polyamide 4, polyamide 6, polyamide 46, polyamide 7, polyamide 8, polyamide 11, polyamide 12, polyamide 66, polyamide 69, polyamide 610, polyamide 611, polyamide 612, polyamide 6/66, and polyamide 6/12. These may be used in combination. Among others, especially preferred aliphatic polyamide resins (A) include polyamide 6, polyamide 66, and polyamide 6/66.

The aliphatic polyamide resin (A) preferably has a number average molecular weight (Mn) of 5, 000 to 50, 000. If the average molecular weight is too low, the mechanical strength of the resulting resin composition tends to be insufficient, but if it is too high, its moldability tends to decrease. More preferably, those having a number average molecular weight of 10,000 to 35,000 are used, most preferably 20,000 to 29,000.

### [(B) Polyamide resin]

The polyamide resin (B) used in the present invention is a polyamide resin composed of a diamine structural unit (a structural unit derived from a diamine) and a dicarboxylic acid structural unit (a structural unit derived from a dicarboxylic acid) wherein 70 mol % or more of the diamine structural unit is derived from xylylenediamine and 50 mol % or more of the dicarboxylic acid structural unit is derived from sebacic acid.

The polyamide resin (B) is obtained by polycondensing a diamine component including 70 mol % or more, preferably 80 mol % or more of xylylenediamine with a dicarboxylic acid component including 50 mol % or more, preferably 70 mol % or more, more preferably 80 mol % or more of sebacic acid.
If xylylenediamine here is less than 70 mol %, the polyamide resin composition finally obtained will be insufficient in barrier properties, while if sebacic acid is less than 50 mol %, the polyamide resin composition forming the molded products of the present invention will be hard so that moldability decreases.
The xylylenediamine used consists of 50 to 100 mol % of m-xylylenediamine and 0 to 50 mol % of p-xylylenediamine if more importance is attached to moldability.

Examples of diamines other than xylylenediamine may include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2, 4, 4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin (including structural isomers thereof), and bis(aminomethyl)tricyclodecane (including structural isomers thereof); diamines having an aromatic ring such as bis(4-aminophenyl)ether, p-phenylenediamine, and bis(aminomethyl)naphthalene (including structural isomers thereof); and they can be used alone or as a mixture of two or more of them.
When a diamine other than xylylenediamine is used as a diamine component, it should be used at a proportion of less than 30 mol %, preferably 1 to 25 mol %, especially preferably 5 to 20 mol % of the diamine structural unit.

Sebacic acid is used at a proportion of 50 mol % or more, preferably 70 mol % or more, more preferably 80 mol % or more of the dicarboxylic acid structural unit. The proportion of the sebacic acid component is preferably higher because compatibility with the aliphatic polyamide resin (A) tends to improve.

Dicarboxylic acid components other than sebacic acid that can be used preferably include straight chain aliphatic α,ω-dicarboxylic acids containing 4 to 20 carbon atoms excluding sebacic acid, examples of which include, for example, aliphatic dicarboxylic acids such as adipic acid, succinic acid, glutaric acid, pimelic acid, suberic acid, azelaic acid, undecanoic diacid, and dodecanoic diacid; and they can be used alone or as a mixture of two or more of them.
If a straight chain aliphatic α,ω-dicarboxylic acid excluding sebacic acid is to be used, it is preferably adipic acid or succinic acid, especially adipic acid.

Aromatic dicarboxylic acids can also be used as dicarboxylic acid components other than sebacic acid, and examples include phthalic acid compounds such as isophthalic acid, terephthalic acid and orthophthalic acid; isomeric naphthalenedicarboxylic acids such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid and 2,7-naphthalenedicarboxylic acid; and they can be used alone or as a mixture of two or more of them. Further, these can also be used in combination with monocarboxylic acids such as benzoic acid, propionic acid and butyric acid; polycarboxylic acids such as trimellitic acid and pyromellitic acid; carboxylic anhydrides such as trimellitic anhydride and pyromellitic anhydride. If a dicarboxylic acid other than the straight chain aliphatic α,ω-dicarboxylic acids containing 4 to 20 carbon atoms is to be used as a dicarboxylic acid component other than sebacic acid, it is preferably isophthalic acid because of the moldability and barrier properties. The proportion of isophthalic acid is preferably less than 30 mol %, more preferably in the range of 1 to 25 mol %, especially preferably 5 to 20 mol% of the dicarboxylic acid structural unit.

Especially preferred polyamide resins (B) are poly(m-xylylenesebacamide) resins derived f romm-xylylenediamine with sebacic acid, and poly(m- / p-xylylene sebacamide) resins derived from m-xylylenediamine and p-xylylenediamine with sebacic acid.

The melting point of the polyamide resin (B) is preferably in the range of 150 to 310 °C, more preferably 160 to 300 °C, even more preferably 170 to 290 °C. The melting point is preferably in the above ranges because its processability tends to improve. The glass transition point of the polyamide resin (B) is preferably in the range of 50 to 130°C. The glass transition point is preferably in the above range because its barrier properties tend to improve.

Asusedherein, the melting point and glass transition point of the aliphatic polyamide resin (A) and polyamide resin (B) refer to the melting point and glass transition point that can be determined by differential scanning calorimetry (DSC) by melting a sample by heating it once to eliminate the influence of thermal history on crystallinity and then heating it again. Specifically, a test sample is, for example, melted by heating from 30 °C to a temperature equal to or higher than an expected melting point at a rate of 10 °C/min, then held at that temperature for 2 minutes and then cooled to 30 °C at a rate of 20 °C/min. Then, the sample is heated to a temperature equal to or higher than the melting point at a rate of 10 °C/min, whereby the melting point and glass transition point can be determined.

The polyamide resin (B) also preferably has a terminal amino group concentration of less than 100 µeq/g, more preferably 5 to 75 µeq/g, even more preferably 10 to 50 µeq/g and preferably has a terminal carboxyl group concentration of less than 100 µeq/g, more preferably 10 to 90 µeq/g, even more preferably 10 to 50 µeq/g.

The polyamide resin (B) also preferably has a relative viscosity of 1.7 to 4, more preferably 1.9 to 3.8 as determined at a resin concentration of 1 g/100 cc in 96 % sulfuric acid at a temperature of 25 °C.
Further, the number average molecular weight of the polyamide resin (B) is preferably 6,000 to 50,000, more preferably 10, 000 to 43, 000. When it is in the above ranges, its mechanical strength and moldability improve.

The polyamide resin (B) is composed of a diamine component including 70 mol % or more of xylylenediamine and a dicarboxylic acid component including 50 mol % or more of sebacic acid, and it is prepared by using any of previously known processes and polymerization conditions including, but not specifically limited to, atmospheric pressure melt polymerization, high pressure melt polymerization and the like.
For example, it is prepared by heating a polyamide salt composed of xylylenediamine and sebacic acid in the presence of water under pressure to polymerize it in the molten state while removing the water added and condensed water. It may also be prepared by directly adding xylylenediamine to sebacic acid in the molten state to polycondense them at atmospheric pressure. In the latter case, polycondensation proceeds by continuously adding xylylenediamine while heating the reaction system to a reaction temperature equal to or higher than the melting points of the produced oligoamide and polyamide to prevent the reaction system from solidifying.

When the polyamide resin (B) is to be obtained by polycondensation, the polycondensation reaction system may be supplied with lactams such as ε-caprolactam, ω-laurolactam and ω-enantolactam; amino acids such as 6-aminocaproic acid, 7-aminoheptanoic acid, 11-aminoundecanoic acid, 12-aminododecanoic acid, 9-aminononanoic acid and p-aminomethylbenzoic acid so far as the performance is not affected.

The polyamide resin (B) can also be used after it is further heat-treated to increase the melt viscosity. Heat treatment methods include, for example, gently heating in the presence of water in an inert gas atmosphere or under reduced pressure using a batch heater such as a rotating drum to induce crystallization while avoiding fusion, and then further heating; or heating in an inert gas atmosphere using a groove stirrer/heater to induce crystallization, and then heating in an inert gas atmosphere using a heater in the form of a hopper; or using a groove stirrer/heater to induce crystallization, and then heating with a batch heater such as a rotating drum.
Among others, the method using a batch heater for crystallization and heat treatments is preferred. Preferred conditions for crystallization treatment are as follows: heating a polyamide resin obtained by melt polymerization to 70 to 120 °C over 0.5 to 4 hours in the presence of 1 to 30 % by mass of water to crystallize it, then heating the crystallized resin at a temperature in the range of [the melting point of the polyamide resin obtained by melt polymerization minus 50 °C] to [the melting point of the polyamide resin obtained by melt polymerization minus 10 °C] for 1 to 12 hours in an inert gas atmosphere or under reduced pressure.

### [Combination of (A) an aliphatic polyamide resin and (B) a polyamide resin]

Polyamide resin compositions forming the molded products of the present invention consists of 50 to 99 parts by mass of (A) an aliphatic polyamide resin and 50 to 1 parts by mass of (B) a polyamide resin per 100 parts by mass of the total of the aliphatic polyamide resin (A) and the polyamide resin (B), and such ranges allow water absorption to be reduced and chemical resistance and dimensional stability to be improved. If the polyamide resin (B) exceeds 50 parts by mass, flexibility decreases. The maximum amount of the polyamide resin (B) should preferably be less than 50 parts by mass, more preferably 45 parts by mass or less, even more preferably 40 parts by mass or less, especially 35 parts by mass or less, while the minimum amount should preferably be 3 parts by mass or more, more preferably 5 parts by mass or more, even more preferably 10 parts by mass or more, especially 20 parts by mass or more. Further, the difference between the melting points of the aliphatic polyamide resin (A) and the polyamide resin (B) is preferably more than 50 °C. Although the underlying mechanism has been so far unknown, there is a tendency that molding shrinkage can be reduced by selecting a partner polyamide resin (B) so that the difference in melting point may be 50 °C or more even if the same aliphatic polyamide resin (A) is used. In the present invention, the difference between the melting points of the aliphatic polyamide resin (A) and the polyamide resin (B) is more preferably more than 50 °C and 80 °C or less.

### [Processes for preparing resin compositions]

Processes for preparing polyamide resin compositions used in the present invention are not specifically limited, but they can be prepared by mixing a polyamide resin (A) and a polyamide resin (B)
in any order to form a dry blend. They also can be prepared by further kneading the dry blend.

Among others, they are preferably prepared by melt kneading using one of various conventional extruders such as a single or twin-screw extruder, especially preferably a twin-screw extruder because of productivity, and versatility. In this case, melt kneading is preferably performed under controlled conditions at a temperature of 200 to 300 °C for a residence time of 10 min or less by using a screw having at least one or more, preferably two or more reverse helix screw elements and/or kneading discs on which the blend partially stays. Insufficient extrusion kneading or resin breakdown tends to be less likely to occur by controlling the melt-kneading temperature in the above range.

### [Processes for preparing molded products]

Polyamide resin compositions forming the molded products of the present invention can be formed into molded products of various shapes by conventionally known molding processes. Examples of molding processes can include, but not limited to, injection molding, blow molding, extrusion molding, compression molding, vacuum molding, press molding, direct blow molding, rotational molding, sandwich molding and two-color molding, for example, more preferably injection molding, compression molding, vacuum molding, press molding and direct blow molding. Especially preferred are injection molding, compression molding, vacuum molding, press molding and direct blow molding, among which injection molding is more preferred because the resulting molded products show very good dimensional stability and high chemical resistance.

Molded products obtained from the polyamide resin compositions described above can be conveniently used as various molded articles that are required to have low water absorption, high chemical resistance, and high crystallinity index, including various parts such as, for example, automotive parts (connectors), machine parts, and electrical/electronic equipment parts. Further, the molded products of the present invention may also be in the form of a sheet or tube so that they can be conveniently usedas industrial, engineering and domestic goods. As usedherein, the term "sheet" means those having a thickness of, for example, more than 0.25 mm.
The molded products of the present invention are especially useful when they have a thinnest thickness of 0.5 mm or more (preferably 1.0 to 2.5 mm), for example.
According to the processes for preparing molded products of the present invention, various molded products required to have low water absorption, high chemical resistance and high crystallinity index can be prepared with high dimensional stability.

### EXAMPLES

The following Examples further illustrate the present invention, but the present invention should not be construed as being limited to these Examples / Comparative examples. Examples 2, 4 and 5 are reference Examples.

### [Materials used]

The materials used in the Examples and Comparative examples are as follows:

### <(A) Aliphatic polyamide resins>

The following commercially available products were used as aliphatic polyamide resins (A).

### - Polyamide 6 (Ny6)

The product available from Ube Industries, Ltd. as grade 1024B having a molecular weight of 28,000, a melting point of 225 °C, and a glass transition point of 48 °C.

### - Polyamide 66 (Ny66)

The product available from Toray Industries, Inc. as grade CM3001N having a molecular weight of 25,000, a melting point of 265 °C, and a glass transition point of 50 °C.

### <(B) Polyamide resins>

The polyamide resins prepared in the following preparation examples 1 to 4 were used as polyamide resins (B).

### <Preparation example 1 (synthesis of poly-m-xylylene sebacamide (MXD10)>

In a reaction vessel, sebacic acid (TA grade available from Itoh Oil Chemicals Co., Ltd.) was melted by heating at 170 °C and then the temperature was raised to 240 °C while m-xylylenediamine (MXDA from Mitsubishi Gas Chemical Company, Inc.) was gradually added dropwise in a molar ratio of 1:1 to sebacic acid while stirring the contents. After completion of the dropwise addition, the temperature was raised to 260 °C. After completion of the reaction, the contents were collected in the form of strands and pelletized in a pelletizer. The resulting pellets were placed in a tumbler and solid-phase polymerized under reduced pressure to give a polyamide resin having a controlled molecular weight.

The polyamide resin (MXD10) had a melting point of 191 °C, a glass transition point of 60 °C, a number average molecular weight of 30,000, and an oxygen transmission rate of 0.8 cc.mm/m².day.atm as determined by the methods described below.

This polyamide resin is hereinafter abbreviated as "MXD10".

### <Preparation example 2 (synthesis of poly(p-xylylene sebacamide) (PXD10)>

A reaction vessel equipped with a stirrer, a partial condenser, a total condenser, a thermometer, a dropping device and a nitrogen inlet as well as a strand die was charged with precisely weighed 8950 g (44 mol) of sebacic acid (TA grade available from Itoh Oil Chemicals Co., Ltd.), 13.7401 g of calcium hypophosphite (150 ppm expressed as the phosphorus atom concentration in the polyamide resin), and 10.6340 g of sodium acetate. The molar ratio between calcium hypophosphite and sodium acetate is 1.0. The reaction vessel was thoroughly purged with nitrogen and then pressurized with nitrogen to 0.3 MPa and heated to 160 °C with stirring to homogeneously melt sebacic acid.

Then, 6026 g (44 mol) of p-xylylenediamine (PXDA) was added dropwise with stirring over 170 min. During then, the internal temperature was continuously raised to 281 °C. During the dropwise addition step, the pressure was controlled at 0.5 MPa and the water generated was removed outside the system through the partial condenser and the total condenser. The temperature in the partial condenser was controlled in the range of 145 to 147 °C. After completion of the dropwise addition of p-xylylenediamine, the pressure was lowered at a rate of 0.4 MPa/hr to atmospheric pressure over 60 min. During then, the internal temperature rose to 299 °C. Then, the pressure was lowered at a rate of 0.002 MPa/min to 0.08 MPa over 20 min.

Then, the reaction was continued at 0.08 MPa until the torque of the stirrer reached a predetermined value. The reaction period at 0.08 MPa was 10 min. Then, the inside of the systemwas pressurized with nitrogen, and the polymer was collected from the strand die and pelletized to give a polyamide resin. The resulting polyamide resin PXD10 had a melting point of 290 °C and a glass transition point of 75 °C. It had a number average molecular weight of 25000, and an oxygen transmission rate of 2.5 cc.mm/m².day.atm.

This polyamide resin is hereinafter abbreviated as "PXD10".

### <Preparation example 3 (synthesis of poly (m-/p-xylylene sebacamide) (MPXD10-1)>

A polyamide resin was obtained in the same manner as in Preparation example 1 except that m-xylylenediamine was replaced by a 3 : 7 mixture (molar ratio) of m-xylylenediamine and p-xylylenediamine and the temperature was raised to 260 °C while the xylylenediamine mixture was gradually added dropwise in a molar ratio of 1:1 to sebacic acid, and after completion of the dropwise addition, the temperature was raised to 280 °C.

The polyamide resin (MPXD10-1) had a melting point of 258 °C, a glass transition point of 70 °C, a number average molecular weight of 20, 000, and an oxygen transmission rate of 2 cc.mm/m2.day.atm as determined by the methods described below.

This polyamide resin is hereinafter abbreviated as "MPXD10-1".

### <Preparation example 4 (synthesis of poly(m-/p-xylylene sebacamide) (MPXD10-2)>

A polyamide resin was obtained in the same manner as in Preparation example 1 except thatm-xylylenediamine was replaced by a 7 : 3 mixture (molar ratio) of m-xylylenediamine and p-xylylenediamine.

The polyamide resin (MPXD10-2) had a melting point of 215 °C, a glass transition point of 63 °C, a number average molecular weight of 28, 000, and an oxygen transmission rate of 1.4 cc.mm/m².day.atm as determined by the methods described below.

This polyamide resin is hereinafter abbreviated as "MPXD10-2".

The melting point and glass transition point (expressed in °C) of the polyamide resins described above were determined by the following method.
The melting point and glass transition point were determined by differential scanning calorimetry (DSC) using DSC-60 available from SHIMADZU CORPORATION under analytical conditions as follows: a sample of about 5 mg was heated from 30 to 300 °C at a rate of 10 °C/min, held at 300 °C for 2 min, then cooled to 30 °C at a rate of 20 °C/min, and then heated at a rate of 10 °C/min, whereby the melting point and glass transition point were determined.

The number average molecular weight of each of the XD10 resins described above was determined as follows. The number average molecular weight was determined by GPC analysis and expressed as an PMMA equivalent using HLC-8320GPC available from Tosoh Corporation on TSKgel SuperHM-H columns eluting with hexafluorolsopropanol (HFIP) containing 10 mmol/l sodium trifluoroacetate at a temperature of 40 °C. A calibration curve was prepared for six PMMA standards dissolved in HFIP.

### <Other additives>

- Glass fiber:
   Chopped strands available from Nippon Electric Glass Co., Ltd. under the brand name "T-275H".
- Nucleating agent: Fine-grained talc available from Hayashi-Kasei Co., Inc. under the brand name "Micron White #5000S".
- Secondary aromatic amine stabilizer:
   N,N'-di-2-naphthyl-p-phenylenediamine available from Ouchi Shinko Chemical Industrial Co., Ltd. under the brand name "NOCRAC White".
      - Inorganic stabilizer: A1: 5 (mass ratio) mixture of copper chloride / potassium iodide.

### (Examples 1 to 7 and Comparative examples 1 to 4)

The components described above were weighed in the amounts shown in Table 1 below (all expressed in parts by mass), blended in a tumbler and fed into a twin-screw extruder ("TEM26SS" available from Toshiba Machine Co. , Ltd.). The components were melt-kneaded under conditions of a cylinder temperature of 300 °C, and a screw speed of 100 rpm and the melt was extruded and pelletized and then dried under vacuum at 150 °C for 5 hours to prepare pellets of polyamide resin compositions.

The resulting pellets were used to perform various evaluations by the evaluation methods described below.

The evaluation results are shown in Table 1.

### [Evaluation methods]

In the Examples and Comparative examples, the analysis/evaluation methods are as follows.

### (1) Evaluation of dimensional stability (molding shrinkage expressed in %)

The pellets described above were injection-molded into test specimens of 60 mm x 60 mm x 2 mm using the injection molding machine "SE130DU-HP model" available from Sumitomo Heavy Industries, Ltd. under conditions of a cylinder temperature of 250 °C to 300 °C, a mold temperature of 30 °C, and a molding cycle time of 40 seconds. The lengths of the test specimens in MD and TD directions were measured and compared with the dimensions of the cavity of the mold to determine molding shrinkages (expressed in %).

The average of the molding shrinkages in machine direction (MD) and transverse direction (TD) was calculated and evaluated as follows.
A: Less than 1
B: 1 or more and less than 1.5
C: 1.5 or more and less than 2
D: 2 or more.

### (2) Evaluation of chemical resistance (elastic modulus retention rate and strength retention rate)

The pellets described above were injection-molded into ISO test specimens (having a thickness of 4. 0mm) using the injection molding machine "SE130DU-HP model" available from Sumitomo Heavy

Industries, Ltd. under conditions of a cylinder temperature of 250 °C to 300 °C, a mold temperature of 30 °C, and a molding cycle time of 40 seconds. The resulting ISO test specimens were annealed at 150 °C for 1 hour. Their flexural strength (expressed in MP.a) and modulus of flexural elasticity (expressed in GPa) were measured according to ISO178 standard at a temperature of 23 °C.

Then, the ISO test specimens were immersed in aqueous solutions each containing 10 % by mass of hydrochloric acid, NaOH or CaCl₂ (at a temperature of 23 °C), and after 7 days, the flexural strength (expressed inMPa) and the modulus of flexural elasticity (expressed in GPa) of the test specimens were measured and compared with the values measured before immersion to determine the retention rates (expressed in %).

Further, the average of the retention rates of elastic modulus and strength after immersion in the aqueous solutions each containing 10 % by mass of hydrochloric acid, NaOH or CaCl₂ (at a temperature of 23 °C) was evaluated as follows.
A: Average of 90 % or more
B: Average of less than 90 % and 60 % or more
C: Average of less than 60 % and 40 % or more
D: Average of less than 40 %.

### (3) Evaluation of the water absorption rate determined as the rate of weight change (expressed in %)

The ISO test specimens described above were immersed in distilled water at 23 °C, and after 110 days, water on the surface was wiped off and then the weight was measured and the water absorption rate (the rate of weight change expressed in %) was calculated from the difference between the weights before and after immersion to observe changes in water absorption rate over time.

Further, the water absorption rate was evaluated according to the following criteria:
A: less than 5 %
B: 5 % or more and less than 7 %
C: 7 % or more and less than 10 %
D: 10 % or more.

### (4) Crystallinity index

The pellets described above were injection-molded into test specimens having a thickness of 4. 0 mm using the injection molding machine "SE130DU-HP model" available from Sumitomo Heavy Industries, Ltd. under conditions of a cylinder temperature of 250 °C to 300 °C, a mold temperature of 30 °C, and a molding cycle time of 40 seconds. The resulting molded products were analyzed by differential scanning calorimetry (DSC)- using "DSC-60" available from SHIMADZU CORPORATION. Evaluation was made according to crystallization peaks during heating as follows:
A: Crystallization peaks during heating with 0 J/g or more and less than 3 J/g
B: Crystallization peaks during heating with 3 J/g or more and less than 5 J/g
C: Crystallization peaks during heating with 5 J/g or more and less than 7 J/g
D: Crystallization peaks during heating with 7 J/g or more.

### (5) Overall evaluation

Based on the results of (1) to (4) above, the total numbers of ratings A to D were counted.

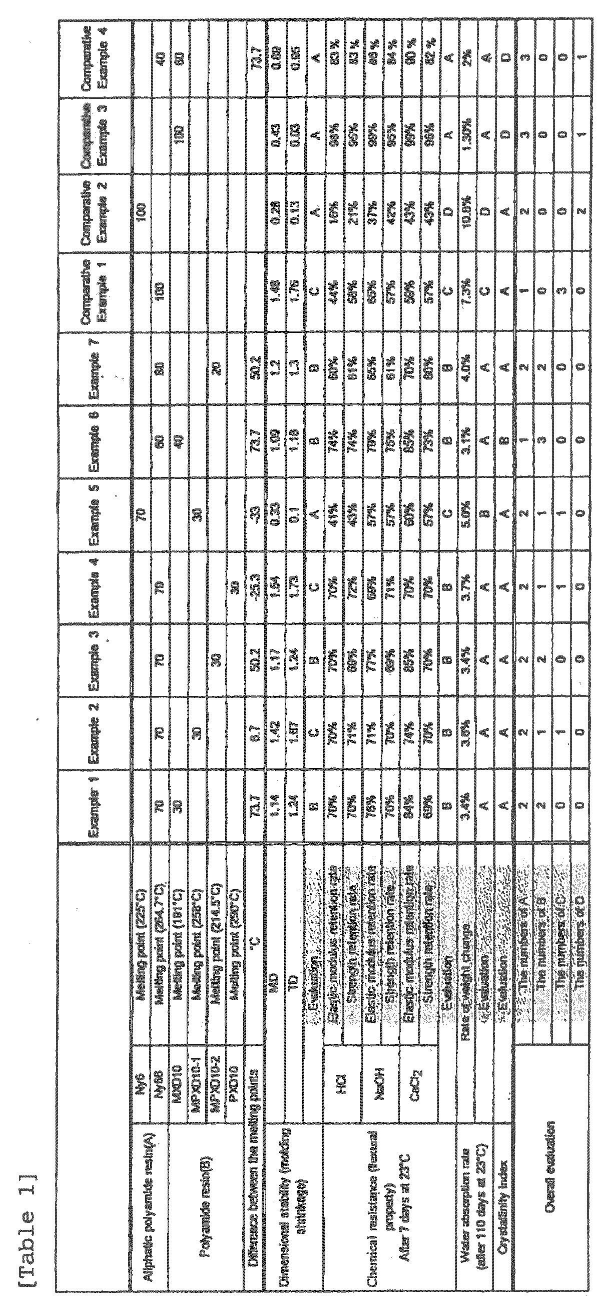

The results above show that the Comparative examples either had a low overall evaluation (high number of rating C) as in the case of Comparative example 1 or included rating D leading to a critical defect as in the case of Comparative examples 2 to 4. By contrast, the Examples included high numbers of rating A and rating B and none of them included rating D, showing that they are excellent materials with balanced properties. Specifically, the systems of Comparative examples 1 and 2 solely composed of an aliphatic polyamide have high crystallinity, but low chemical resistance and high water absorption rate. On the other hand, the systems of Comparative examples 3 and 4 containing high levels of a polyamide resin (B) were found to be defective for use as molded products because they had low crystallinity index though they had high chemical resistance.

Further, pellets were prepared in the same manner as in Example 1 except that 100 parts by mass of the glass fiber, 0.2 parts by mass of the fine-grained talc, 0.1 part by mass of the secondary aromatic amine stabilizer, and 0.2 parts by mass of the inorganic stabilizer were added per 100 parts by mass of the resin composition, and subjected to various evaluations. The properties of the resulting molded product (Reference Example) were as excellent as those of Example 1.

### INDUSTRIAL APPLICABILITY

The molded products of the present invention show high chemical resistance, low water absorption rate and high crystallinity index so that they can be conveniently used as various parts, and therefore, they will find very wide industrial applicability. Further, the processes for preparing molded products according to the present invention allow molded products having high dimensional stability to be prepared.

## Claims

1. A molded product formed from a polyamide resin composition consisting of 50 to 99 parts by mass of (A) an aliphatic polyamide resin and 50 to 1 parts by mass of (B) a polyamide resin composed of 70 mol % or more of a diamine structural unit derived from xylylenediamine and 50 mol % or more of a dicarboxylic acid structural unit derived from sebacic acid, provided that the total of (A) and (B) is 100 parts by mass wherein the xylylenediamine consists of 50 to 100 mol % of m-xylylenediamine and 0 to 50 mol % of p-xylylenediamine.

2. The molded product according to claim 1, wherein the aliphatic polyamide resin (A) is polyamide 6 or polyamide 66.

3. The molded product according to any one of claims 1 to 2, wherein the polyamide resin (B) is a poly(m-xylylene sebacamide) resin, or a poly(m-/p-xylylene sebacamide) resin.

4. The molded product according to any one of claims 1 to 3, which has a thinnest part having thickness of 0.5 mm or more.

5. The molded product according to any one of claims 1 to 4, wherein the amount of the polyamide resin (B) contained in the polyamide resin composition is 20 to 50 parts by mass per 100 parts by mass of the total of (A) and (B).

6. The molded product according to any one of claims 1 to 5, which is formed by any one of injection molding, compression molding, vacuum molding, press molding and direct blow molding.

7. A process for preparing a molded product, comprising molding a polyamide resin composition consisting of 50 to 99 parts by mass of (A) an aliphatic polyamide resin and 50 to 1 parts by mass of (B) a polyamide resin composed of 70 mol % or more of a diamine structural unit derived from xylylenediamine and 50 mol % or more of a dicarboxylic acid structural unit derived from sebacic acid (provided that the total of (A) and (B) is 100 parts by mass) wherein the xylylenediamine consists of 50 to 100 mol % of m-xylylenediamine and 0 to 50 mol % of p-xylylenediamine by any one of injection molding, compression molding, vacuum molding, press molding and direct blow molding.

## Patentansprüche

1. Ein Formkörper, der gebildet ist aus einer Polyamidharzzusammensetzung bestehend aus 50 bis 99 Masseteilen (A) eines aliphatischen Polyamidharzes und 50 bis 1 Masseteilen (B) eines Polyamidharzes, das zusammengesetzt ist aus 70 mol % oder mehr einer Diaminstruktureinheit, die abgeleitet ist von Xylylendiamin, und 50 mol % oder mehr einer Dicarbonsäure-Struktureinheit, die abgeleitet ist von Sebacinsäure, mit der Maßgabe, dass die Gesamtmenge von (A) und (B) 100 Masseteile beträgt, wobei das Xylylendiamin aus 50 bis 100 mol % m-Xylylendiamin und 0 bis 50 mol % p-Xylylendiamin besteht.

2. Der Formkörper gemäß Anspruch 1, wobei das aliphatische Polyamidharz (A) Polyamid 6 oder Polyamid 66 ist.

3. Der Formkörper gemäß einem der Ansprüche 1 bis 2, wobei das Polyamidharz (B) ein Poly(m-Xylylen-Sebacinsäureamid)-Harz oder ein Poly(m-/p-Xylylen-Sebacinsäureamid)-Harz ist.

4. Der Formkörper gemäß einem der Ansprüche 1 bis 3, der ein dünnstes Teil mit einer Dicke von 0,5 mm oder mehr aufweist.

5. Der Formkörper gemäß einem der Ansprüche 1 bis 4, wobei die Menge des Polyamidharzes (B), die in der Polyamidharzzusammensetzung enthalten ist, 20 bis 50 Masseteile auf 100 Masseteile der Gesamtmenge von (A) und (B) beträgt.

6. Der Formkörper gemäß einem der Ansprüche 1 bis 5, der gebildet ist durch eines aus Spritzguss, Formpressen, Vakuumformen, Druckformen und direktem Blasformen.

7. Ein Verfahren zur Herstellung eines Formkörpers, umfassend Formen einer Polyamidharzzusammensetzung bestehend aus 50 bis 99 Masseteilen (A) eines aliphatischen Polyamidharzes und 50 bis 1 Masseteilen (B) eines Polyamidharzes, das zusammengesetzt ist aus 70 mol % oder mehr einer Diaminstruktureinheit, die abgeleitet ist von Xylylendiamin, und 50 mol % oder mehr einer Dicarbonsäure-Struktureinheit, die abgeleitet ist von Sebacinsäure (mit der Maßgabe, dass die Gesamtmenge von (A) und (B) 100 Masseteile beträgt), wobei das Xylylendiamin aus 50 bis 100 mol % m-Xylylendiamin und 0 bis 50 mol % p-Xylylendiamin besteht, durch eines aus Spritzguss, Formpressen, Vakuumformen, Druckformen und direktem Blasformen.

## Revendications

1. Produit moulé formé à partir d'une composition de résine polyamide consistant en 50 à 99 parties en poids de (A) une résine polyamide aliphatique et en 50 à 1 parties en poids de (B) une résine polyamide composée de 70 % en mol ou plus d'un motif structural diamine dérivé de la xylylène diamine et de 50 % en mol ou plus d'un motif structural acide dicarboxylique dérivé de l'acide sébacique, à condition que le total de (A) et (B) soit de 100 parties en poids dans lequel la xylylène diamine consiste en 50 à 100 % en mol de m-xylylène diamine et en 0 à 50 % en mol de p-xylylène diamine.

2. Produit moulé selon la revendication 1, dans lequel la résine polyamide aliphatique (A) est le polyamide 6 ou le polyamide 66.

3. Produit moulé selon l'une quelconque des revendications 1 à 2, dans lequel la résine polyamide (B) est une résine poly(sébaçamide de m-xylylène), ou une résine poly(sébaçamide de m-/p-xylylène).

4. Produit moulé selon l'une quelconque des revendications 1 à 3, dont la partie la plus mince a une épaisseur de 0,5 mm ou plus.

5. Produit moulé selon l'une quelconque des revendications 1 à 4, dans lequel la quantité de résine polyamide (B) contenue dans la composition de résine polyamide est de 20 à 50 parties en poids pour 100 parties en poids du total de (A) et (B).

6. Produit moulé selon l'une quelconque des revendications 1 à 5, qui est formé par une technique quelconque parmi le moulage par injection, le moulage par compression, le moulage sous vide, le moulage à la presse et le moulage par soufflage direct.

7. Procédé de préparation d'un produit moulé, comprenant le moulage d'une composition de résine polyamide consistant en 50 à 99 parties en poids de (A) une résine polyamide aliphatique et en 50 à 1 parties en poids de (B) une résine polyamide composée de 70 % en mol ou plus d'un motif structural diamine dérivé de la xylylène diamine et de 50 % en mol ou plus d'un motif structural acide dicarboxylique dérivé de l'acide sébacique (à condition que le total de (A) et (B) soit de 100 parties en poids) dans lequel la xylylène diamine consiste en 50 à 100 % en mol de m-xylylène diamine et en 0 à 50 % en mol de p-xylylène diamine par une technique quelconque parmi le moulage par injection, le moulage par compression, le moulage sous vide, le moulage à la presse et le moulage par soufflage direct.
